# EUROPÄISCHE PATENTSCHRIFT

(11) **EP 0 758 518 B1**
(45) Veröffentlichungstag und Bekanntmachung des Hinweises auf die Patenterteilung: **16.05.2001**
(21) Anmeldenummer: 96901939.7
(22) Anmeldetag: 26.02.1996
(51) Int. Cl.: H04Q 11/04, H04M 11/04

(54) **TELEKOMMUNIKATIONSSYSTEM**
TELECOMMUNICATION SYSTEM
SYSTEME DE TELECOMMUNICATION

(30) Priorität: 06.03.1995 DE 19507656
(43) Veröffentlichungstag der Anmeldung: 19.02.1997
(73) Patentinhaber: Koninklijke Philips Electronics N.V., 5621 BA Eindhoven (NL); Philips Corporate Intellectual Property GmbH, 52064 Aachen (DE)
(72) Erfinder: RUPRECHT, Michael, D-96450 Coburg (DE)
(74) Vertreter: Peuckert, Hermann, Dipl.-Ing.
(86) Internationale Anmeldenummer: IB9600144
(87) Internationale Veröffentlichungsnummer: WO9627998

(56) Entgegenhaltungen:
- EP-A- 0 487 416
- WO-A-89/04574
- US-A- 4 920 556
- US-A- 4 998 274
- PATENT ABSTRACTS OF JAPAN vol. 016, no. 204 (E-1202), 15.Mai 1992 & JP,A,04 032334 (OKI ELECTRIC IND CO LTD), 4.Februar 1992,
- PATENT ABSTRACTS OF JAPAN vol. 018, no. 270 (E-1552), 23.Mai 1994 & JP,A,06 046158 (TOKYO ELECTRIC CO LTD), 18.Februar 1994,

## Beschreibung

Die Erfindung betrifft ein Telekommunikationssystem gemäß dem Oberbegriff von Anspruch 1.

Bei einem solchen Telekommunikationssystem, das insbesondere eine ISDN-TK-Anlage (Telekommunikations-Anlage bzw. Nebenstellenanlage) darstellt, besteht in vielen Fällen das Bedürfnis, zusätzlich zu den Telekommunikationsendgeräten, die im Regelfall komfortable und mit vielen Leistungsmerkmalen ausgestattete Endgeräte, beispielsweise Komfort-Telefone sind, auch eine Möglichkeit zu schaffen, eine gegenüber der Verwendung von solchen Telekommunikationsendgeräten vereinfachte Möglichkeit zu schaffen, innerhalb des Telekommunikationssystems Informationen auszutauschen. Dies ist beispielsweise dort gegeben, wo für pflegebedürftige Menschen für Notfälle ein Notrufsystem erforderlich ist. In Notfällen ist die Bedienung eines komplizierten Telekommunikationsendgerätes wie beispielsweise eines Komfort-Telefons zu unsicher. Bisherige Notrufsysteme lassen keine Kommunikation mit einem eine Vermittlungsvorrichtung aufweisenden Telekommunikationssystem zu, so daß eine unabhängige Installation der Systeme erforderlich ist. Die technische Leistungsfähigkeit eines solchen Telekommunikationssystems bleibt damit ungenutzt. Die getrennte Verkabelung für das Telekommunikationssystem und das Notrufsystem ist außerdem aufwendig und teuer.

Aus der US 4,998,274 ist ein Telekommunikationssystem mit einer ISDN-TK-Anlage bekannt. Über einen ISDN-Bus sind ISDN-Endgeräte mit der TK-Anlage gekoppelt. Außerdem ist in diesem Telekommunikationssystem die Möglichkeit geschaffen, über einen analogen Bus konventionelle analoge Telephone parallel zu den ISDN-Endgeräten zu betreiben.

Der Erfindung liegt deshalb die Aufgabe zugrunde, das Telekommunikationssystem der eingangs genannten Art so zu verbessern, daß mit möglichst wenig Aufwand die Möglichkeit einer vereinfachten Notrufsystemrealisierung geschaffen wird.

Die Aufgabe wird durch die Merkmale des kennzeichnenden Teils von Anspruch 1 gelöst.

Durch die Betätigung des Betätigungsschalters wird eine Übertragung einer Notrufinformation vom Telekommunikationsendgerät zu einer Notrufzentrale und/oder einem anderen Teilnehmerendgerät ausgelöst. Vorteilhaft wird die Übertragung der Notrufinformation durch eine Zielwahl des Telekommunikationsendgerätes ausgelöst. Ein Betätigungsschalter stellt eine sehr einfache Möglichkeit dar, einen Notruf an andere Stellen des Telekommunikationssystems abzusenden. So bewirkt das Schließen des Betätigungsschalters den Fluß eines Gleichstroms, der leicht vom Telekommunikationsendgerät detektierbar ist. Das Vorhandensein eines solchen Gleichstroms kann dann vom Telekommunikationsendgerät leicht in eine Zielwahl umgesetzt werden, wodurch über die Vermittlungsvorrichtung eine Notrufzentrale und/oder ein anderes Telekommunikationsendgerät gerufen wird, von wo aus auf das Betätigen des Betätigungsschalters und damit auf den Notruf reagiert werden kann.

Als Kommunikationsmittel können zusätzlich oder alternativ zu dem Betätigungsschalter Anzeigemittel vorgesehen werden, die über die zweite Anzahl Busleitungen mit dem Telekommunikationsendgerät gekoppelt sind.

Mögliche Anzeigemittel sind beispielsweise Glühlampen und Leuchtdioden. Mit Hilfe der Anzeigemittel wird einem Benutzer beispielsweise angezeigt, ob sich das Telekommunikationssystem in einem störungsfreien Zustand befindet. Der Informationsfluß ist hier vom Telekommunikationsendgerät zu den Anzeigemitteln gerichtet. Die mit Hilfe der Anzeigemittel mögliche Anzeige einer Störungsfreiheit des Telekommunikationssystems dient insbesondere zur Beruhigung der Benutzer des Systems, die im Regelfall stark vom Funktionieren des Notrufsystems abhängig sind.

Wenn sowohl die Stromversorgung des Telekommunikationsendgerätes als auch die Stromversorgung von Betätigungsschalter und Anzeigemitteln auf einer Phantomspeisung beruhen, ist sichergestellt, daß auch bei einer Vertauschung von Busleitungen bei der Systeminstallation keine Zerstörungen in der Vermittlungsvorrichtung durch einen Kurzschluß bewirkt werden können. Ein ISDN-Technik integrierendes Telekommunikationssystem, also ein Telekommunikationssystem mit digitaler Vermittlungstechnik, ist mit geringem technischen Aufwand auf die erfindungsgemäße Weise erweiterbar. So ist nur in geringem Maße zusätzliche Hardware im Telekommunikationsendgerät erforderlich. Das Telekommunikationsendgerät kann dann beispielsweise als ISDN-Telefon ausgeführt sein.

Die Kommunikationsmittel Anzeigemittel und Betätigungsschalter setzen entweder vom Telekommunikationsgerät kommende Gleichstromsignale in akustische oder optische Signale für den Benutzer und/oder Einwirkungen des Benutzers auf die Kommunikationsmittel in Gleichstromsignale für das Telekommunikationsgerät um. In vielen Fällen ist die zweite Anzahl an Busleitungen schon bei der Installation des eingangs genannten Telekommunikationssystems vorgesehen. In so einem Fall ist kein technischer Aufwand für zusätzliche Busleitungen erforderlich. Bei einer Neuinstallation des Telekommunikationssytems stellt das Zurverfügungstellen der zweiten Anzahl an Busleitungen einen geringen technischen Aufwand dar. Sowohl für das Telekommunikationsgerät als auch für die Kommunikationsmittel ist es nicht erforderlich, jeweils eine eigene Stromversorgung vorzusehen.

In einer anderen Ausgestaltung ist vorgesehen, daß die aus der Phantomspeisung resultierende Gleichspannung zur Erzeugung eines Gleichstroms durch den Betätigungsschalter in Abhängigkeit von dessen Schaltzustand dient und daß dieser Gleichstrom zur Detektion des Schaltzustandes des Betätigungsschalters durch das Telekommunikationsendgerät dient.

Die Erfindung bezieht sich auch auf ein Telekommunikationsendgerät, insbesondere ein ISDN-Telekommunikationsendgerät, zur Verwendung im oben beschriebenen Telekommunikationssystem, bei dem ein Ausgang (24, 25) zur Lieferung einer Gleichspannung an den Betätigungsschalter (28) und/oder die Anzeigemittel (29) dient, die Gleichspannung mit Hilfe der zur Stromversorgung des Telekommunikationsendgeräts (19) dienenden Phantomspeisung erzeugt wird, dem Ausgang (24, 25) Mittel (46) zur Detektion eines durch die Gleichspannung erzeugbaren Gleichstroms zugeordnet sind und bei dem in Abhängigkeit von der Detektion des genannten Gleichstroms die Auslösung einer Übertragung einer Notrufinformation zu einer Notrufzentrale und/oder einem anderen Teilnehmerendgerät vorgesehen ist. Insbesondere ist zur Auslösung der Übertragung der Notrufinformation eine Zielwahl vorgesehen.

Ein Ausführungsbeispiel der Erfindung wird nachstehend anhand der Zeichnungen näher erläutert. Es zeigen:
Fig. 1 ein erfindungsgemäßes Telekommunikationssystem, und
Fig. 2 ein Telekommunikationsendgerät für das Telekommunikationssystem.

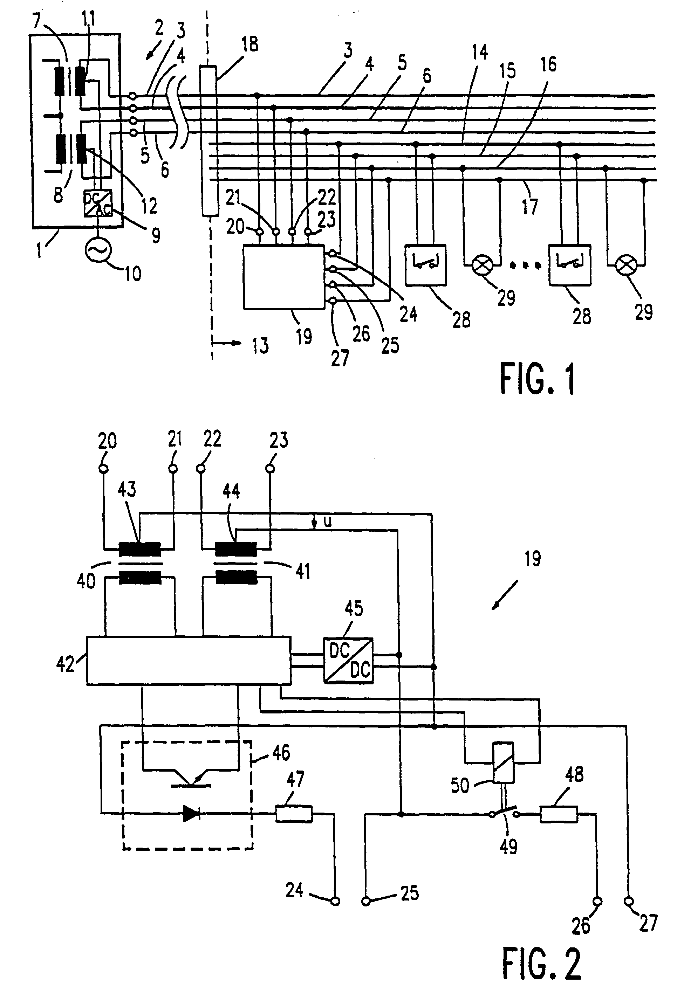

Das in Fig. 1 dargestellte Telekommunikationssystem enthält eine Vermittlungsvorrichtung 1, im vorliegenden Fall eine ISDN-TK-Anlage, die ausgangsseitig an einen S₀-Bus 2 angeschlossen ist, der aus vier Busleitungen 3, 4, 5 und 6 besteht. Der S₀-Bus ist über auf der Ausgangsseite der Vermittlungsvorrichtung 1 angeordnete Übertrager 7 und 8 mit den Schaltungsanordnungen der Vermittlungsvorrichtung 1 gekoppelt, die hier nicht dargestellt sind und die den für eine solche Vermittlungsvorrichtung 1 üblichen Aufbau besitzen. Zur Phantomspeisung (Fernspeisung) von an den S₀-Bus 2 angeschlossenen Teilnehmerendgeräten ist ein Wandler 9 vorgesehen, der eine Wechselspannung 10 (220 V, Netzspannung) in eine Gleichspannung umsetzt und diese Gleichspannung über Mittelanzapfungen 11 und 12 der ausgangsseitigen Spulen der Übertrager 7 und 8 dem S₀-Bus 2 zuführt.

In einem räumlich begrenzten Bereich 13 (z.B. ein Zimmer, eine Wohnung) werden parallel zum S₀-Bus 2 mit den Busleitungen 3, 4, 5 und 6 vier weitere Busleitungen 14, 15, 16 und 17 verlegt, die am Übergang zum Bereich 13 an einer Schnittstelle 18 leerlaufen. Die Verlegung eines Busses mit 8 Leitungen erfordert gegenüber einer Verlegung eines Busses mit vier Busleitungen keinen hohen technischen Aufwand. Häufig ist auch schon bei der Installation des Telekommunikationssystems die Verlegung eines Busses mit acht Busleitungen vorgesehen, auch unter dem Gesichtspunkt, daß S₀-Steckverbindungen nach ISO/IEC-8877-Standard 8-polig definiert sind.

An die Busleitungen 3, 4, 5 und 6 ist ein Telekommunikationsendgerät 19, im vorliegenden Fall ein ISDN-Telefon, über Anschlüsse 20, 21, 22 und 23 angeschlossen. Über Anschlüsse 24, 25, 26 und 27 ist das Telekommunikationsendgerät 19 mit den Busleitungen 14, 15, 16 und 17 gekoppelt. Die Anschlüsse 20 bis 27 sind vorteilhaft in einer S₀-Steckverbindung nach ISO/IEC-8877-Standard 8-polig (Western-Stecker) zusammengefaßt. An die Busleitungen 14 und 15 wird mindestens ein Betätigungsschalter 28 angekoppelt. Mindestens eine als Anzeigemittel dienende Glühlampe 29 ist an die Busleitungen 16 und 17 gekoppelt. Anstelle der Glühlampen können auch Leuchtdioden verwendet werden. Auch der Einsatz akustischer Anzeigemittel ist möglich. Mit Hilfe der Betätigungsschalter 28 läßt sich ein Signal über die Busleitungen 14 und 15 an das Telekommunikationsendgerät 19 übertragen. Weiterhin läßt sich über die Anzeigemittel 29 eine vom Teilnehmerendgerät 19 kommende Information anzeigen.

Das beschriebene Telekommunikationssystem dient insbesondere als eine ein Notrufsystem integrierende Telekommunikationsanlage, beispielsweise in Krankenhäusern oder Altenpflegeheimen. In Notfällen kann von einem in eine Notlage gekommenen Benutzer durch Betätigung einer der Betätigungsschalter 28 ein Notfallsignal an das Telekommunikationsendgerät 19 gesendet werden. Die Anzeigemittel 29 dienen insbesondere dazu, den korrekten Empfang des Notfallsignals beim Teilnehmerendgerät 19 zu bestätigen. Denkbar ist auch die Anzeige einer Störungsfreiheit des Notfallsystems. Die Anzeigemittel 29 dienen in diesen Fällen zur Beruhigung einer notfallgefährdeten Person.

Anhand von Fig. 2 wird im folgenden der Aufbau und die Funktionsweise des Telekommunikationsendgerätes 19 näher erläutert. Dieses weist eingangsseitig zwei Übertrager 40 und 41 auf, über die der Schaltungsblock 42 mit den Anschlüssen 20, 21, 22 und 23 und damit mit dem S₀-Bus 2 gekoppelt ist. Der Schaltungsblock 42 dient u.a. zur Verarbeitung der über den S₀-Bus 2 übertragenen vermittlungstechnischen Informationen bzw. von Gesprächs- oder Datensignalen. In bezug hierauf enthält der Schaltungsblock 42 die für ein ISDN-Telefon üblichen Schaltungsanordnungen.

Die Übertrager 40 und 41 weisen Mittelanzapfungen 43 und 44 auf, über die eine aus der Phantomspeisung durch die Vermittlungsvorrichtung 1 resultierende Versorgungsgleichspannung U abgegriffen werden kann. Die Versorgungsgleichspannung U wird von einem Wandler 45 in eine vom Betrage her geänderte Gleichspannung umgesetzt, die zur Stromversorgung der Schaltungsanordnungen des Schaltungsblockes 42 dient.

Das an der Mittelanzapfung 43 anliegende Potential wird der Reihenschaltung aus einem Optokoppler 46 und einem zur Strombegrenzung dienenden Widerstand 47 zugeführt, auf deren anderer Seite sich der Anschluß 24 des Teilnehmerendgerätes 19 befindet, der mit der Busleitung 14 des Telekommunikationssystems gekoppelt ist. Am Anschluß 25, der mit der Busleitung 15 des Telekommunikationssystems gekoppelt ist, liegt das an der Mittelanzapfung 44 erzeugte Potential an.

Wird einer der Betätigungsschalter 28 geschlossen, führt dies zu einem Stromfluß durch den Betätigungsschalter 28, den Optokoppler 46 und den Widerstand 47, woraufhin der Optokoppler 46 ein entsprechendes Steuersignal an den Schaltungsblock 42 erzeugt. Der Schaltungsblock 42 enthält Schaltungsanordnungen, die in so einem Fall sofort ein über das Telekommunikationsendgerät 19 geführtes Gespräch unterbricht und eine Zielwahl durchführt, so daß ein Rufsignal bzw. Notrufsignal für eine nicht dargestellte Notrufzentrale, z.B. ein anderes Teilnehmerendgerät, erzeugt und an die Vermittlungsvorrichtung 1 übermittelt wird. Für diese Zielwahl ist in einem Wahlnummernspeicher des Telekommunikationsendgeräts 19 eine zugehörige Zielwahlnummer abgelegt. Es ist weiterhin eine Programmiersperre für das Telekommunikationsendgerät 19 vorgesehen, um eine Umprogrammierung durch eine notfallgefährdete Person und damit einen Ausfall des Notfallsystems zu verhindern.

Das Potential an der Mittelanzapfung 43 liegt außerdem an einem Anschluß 27 des Teilnehmerendgerätes 19 an. Weiterhin ist ein Anschluß 26 über die Reihenschaltung eines zur Strombegrenzung dienenden Widerstandes 48 und einem relaisgesteuerten Schalter 49 mit dem an der Mittelanzapfung 44 anliegenden Potential gekoppelt. Das Relais 50 zur Steuerung des Schalters 49 wird durch Schaltungsanordnungen des Schaltungsblockes 42 gesteuert. Im Normalzustand (kein Notfall) steuert der Schaltungsblock 42 das Relais 50 so an, daß der Schalter 49 geöffnet ist und durch die Versorgungsgleichspannung U kein über die Anschlüsse 26 und 27 und die Busleitungen 16 und 17 fließender Gleichstrom für die Anzeigemittel 29 erzeugt wird. Im diesem Fall leuchten die Glühlampen 29 nicht auf. Beim Auslösen eines Notrufsignals durch Betätigung des Betätigungsschalters 28 steuert der Schaltungsblock 42 das Relais 50 so, daß der Schalter 49 geschlossen wird. Über die Anschlüsse 26 und 27 wird den Anzeigemitteln 29 nun ein Gleichstrom zugeführt. Die Glühlampen 29 leuchten auf und der Benutzer des Notrufsystems ist über den korrekten Empfang des Notrufsignals informiert. Sinnvoll wäre auch eine Ausgestaltung, bei der die Glühlampen aufleuchten, solange das Telekommunikationssystem unter Einschluß des Notrufsystems einwandfrei arbeitet, und bei der die Glühlampen erlöschen, wenn eine Störung vorliegt.

Vorteilhaft wird für den Betätigungsschalter 28 und die Anzeigemittel 29, die als Kommunikationsmittel zur vereinfachten Kommunikation mit einem Benutzer dienen, keine eigene Stromversorgung benötigt, da die entsprechende, an den Anschlüssen 24 und 25 bzw. 26 und 27 anliegende Versorgungsspannung aus der aus der Phantomspeisung resultierenden Versorgungsgleichspannung U abgeleitet wird. Die Versorgungsgleichspannung U steht bei jedem ISDN-Telefon zur Verfügung. Zu ihrer Erzeugung ist kein zusätzlicher Schaltungsaufwand notwendig. Der technische Aufwand zur Implementierung eines oben beschriebenen Notrufsystems in das Telekommunikationssystem ist bei der erfindungsgemäßen Ausführung sehr niedrig. Da sowohl das Telekommunikationsendgerät 19 als auch die Betätigungsschalter 28 und die Anzeigemittel 29 keine eigene Stromversorgung besitzen, ist sichergestellt, daß auch beim Vertauschen von Busleitungen bei der Installation des Telekommunikationssystems eine Zerstörung von Schaltungseinheiten der Vermittlungsvorrichtung 1 durch einen Kurzschluß unmöglich ist.

## Patentansprüche

1. Telekommunikationssystem mit einer Vermittlungsvorrichtung (1) und einem über eine erste Anzahl an Busleitungen (3, 4, 5, 6) mit der Vermittlungsvorrichtung (1) gekoppelten Telekommunikationsendgerät (19),
dadurch gekennzeichnet,
daß mindestens ein Betätigungsschalter (28) zur Kommunikation mit einem Benutzer vorgesehen sind, der über eine zweite Anzahl Busleitungen (14, 15, 16, 17) mit dem Telekommunikationsendgerät (19) gekoppelt ist und
daß durch die Betätigung des Betätigungsschalters (28) eine Übertragung einer Notrufinformation vom Telekommunikationsendgerät (19) zu einer Notrufzentrale und/oder einem anderen Teilnehmerendgerät ausgelöst wird.

2. Telekommunikationssystem nach Anspruch 1,
dadurch gekennzeichnet,
daß vorgesehen ist, eine über die erste Anzahl Busleitungen erfolgende Phantomspeisung des Telekommunikationsendgerätes (19) zur Erzeugung einer Gleichspannung auszunutzen, die zur Erzeugung eines Gleichstroms durch den Betätigungsschalter (28) in Abhängigkeit von dessen Schaltzustand dient und
daß dieser Gleichstrom zur Detektion des Schaltzustandes des Betätigungsschalters (28) durch das Telekommunikationsendgerät (19) dient.

3. Telekommunikationssystem nach einem der Ansprüche 1 oder 2,
dadurch gekennzeichnet,
daß die Übertragung der Notrufinformation durch eine Zielwahl des Telekommunikationsendgerätes (19) ausgelöst wird.

4. Telekommunikationssystem nach einem der Ansprüche 1 bis 3,
dadurch gekennzeichnet,
daß zusätzlich oder alternativ zu dem Betätigungsschalter (28) Anzeigemittel (29) vorgesehen sind, die über die zweite Anzahl Busleitungen (14, 15, 16, 17) mit dem Telekommunikationsendgerät (19) gekoppelt sind.

5. Telekommunikationssystem nach Anspruch 4,
dadurch gekennzeichnet,
daß die Anzeigemittel (29) zur Anzeige eines korrekten Empfangs der übertragenen Notrufinformation dienen.

6. Telekommunikationssystem nach Anspruch 4,
dadurch gekennzeichnet,
daß die Anzeigemittel (29) zur Anzeige der Störungsfreiheit des auf der Basis des Betätigungsschalters (28) arbeitenden Notrufsystems dienen.

7. Telekommunikationsendgerät, insbesondere ISDN-Telekommunikationsendgerät, zur Verwendung in einem Telekommunikationssystem nach einem der Ansprüche 1 bis 6,
dadurch gekennzeichnet,
daß ein Ausgang (24, 25) zur Lieferung einer Gleichspannung an den Betätigungsschalter (28) und/oder die Anzeigemittel (29) dient,
daß die Gleichspannung mit Hilfe der zur Stromversorgung des Telekommunikationsendgeräts (19) dienenden Phantomspeisung erzeugt wird,
daß dem Ausgang (24, 25) Mittel (46) zur Detektion eines durch die Gleichspannung erzeugbaren Gleichstroms zugeordnet sind und
daß in Abhängigkeit von der Detektion des genannten Gleichstroms die Auslösung einer Übertragung einer Notrufinformation zu einer Notrufzentrale und/oder einem anderen Teilnehmerendgerät vorgesehen ist.

8. Telekommunikationsendgerät nach Anspruch 7,
dadurch gekennzeichnet,
daß zur Auslösung der Übertragung der Notrufinformation eine Zielwahl vorgesehen ist.

## Claims

1. A telecommunication system comprising a service switching point (1) and a telecommunication terminal unit (19) coupled to the service switching point (1) by a first number of bus lines (3, 4, 5, 6),
characterized
in that at least one actuation switch (28) is provided for communication to a user who is coupled to the telecommunication terminal unit (19) by a second number of bus lines (14, 15, 16, 17) and in that the actuation of the actuation switch (28) causes a transmission of emergency call information to take place from telecommunication terminal unit (19) to an emergency call switching centre and/or another subscriber terminal unit.

2. A telecommunication system as claimed in claim 1,
characterized
in that a phantom power supply of the telecommunication terminal unit (19), which takes place via the first number of bus lines, is used for generating a DC voltage which is used for generating a DC current via the actuation switch (28) in dependence on its switching condition and
in that this DC current is used for detecting the switching condition of the actuation switch (28) via the telecommunication terminal unit (19).

3. A telecommunication system as claimed in one of the claims 1 or 2,
characterized
in that the transmission of the emergency call information is triggered by a speed dialing of the telecommunication terminal unit (19).

4. A telecommunication system as claimed in claims 1 to 3,
characterized
in that in addition to or as an alternative of the actuation switch (28) display means (29) are provided which are coupled to the telecommunication terminal unit (19) via the second bus lines (14, 15, 16, 17).

5. A telecommunication system as claimed in claim 4,
characterized
in that the display means (29) are used for displaying a correct reception of the transmitted emergency call information.

6. A telecommunication system as claimed in claim 4,
characterized
in that the display means (29) are used for displaying that the emergency call system works free of disturbance on the basis of the actuation switch (28).

7. A telecommunication terminal unit, more particularly an ISDN telecommunication terminal unit, to be used in the telecommunication system as claimed in one of the claims 1 to 6,
characterized
in that an output (24, 25) is used for supplying a DC voltage to the actuation switch (28) and/or the display means (29),
in that the DC voltage is generated by the phantom power supply used for supplying power to the telecommunication terminal unit (19),
in that detecting means (46) for detecting a DC current which can be generated by the DC voltage is assigned to the output (24, 25), and
in that the transmission of emergency call information to an emergency call switching centre and/or another subscriber terminal unit is triggered in dependence on the detection of said DC current.

8. A telecommunication terminal unit as claimed in claim 7,
characterized
in that speed dialing is provided for triggering the transmission of the emergency call information.

## Revendications

1. Système de télécommunication avec un dispositif de transmission (1) et un terminal de télécommunication (19) couplé par l'intermédiaire d'un premier nombre de lignes de bus (3,4, 5, 6) avec le dispositif de transmission (1),
caractérisé en ce
qu'au moins un interrupteur d'actionnement (28) est prévu pour la communication avec un utilisateur qui est couplé au terminal de télécommunication (19) par l'intermédiaire d'un deuxième nombre de lignes de bus (14, 15, 16, 17) et
que, par l'actionnement de l'interrupteur d'actionnement (28), une transmission d'une information d'appel d'urgence du terminal de télécommunication (19) vers une centrale d'urgence et/ou un autre terminal participant est déclenchée.

2. Système de télécommunication selon la revendication 1,
caractérisé en ce
qu'il est prévu une alimentation fantôme se produisant par le premier nombre de lignes de bus du terminal de télécommunication (19) en vue de la production d'une tension continue qui sert à la production d'un courant continu par l'interrupteur d'actionnement (28) en fonction de son état de commutation et
que ce courant continu sert à la détection de l'état de commutation de l'interrupteur d'actionnement (28) par le terminal de communication (19).

3. Système de télécommunication selon l'une des revendications 1 ou 2,
caractérisé en ce que
la transmission de l'information d'appel d'urgence est déclenchée par un choix de destination sur le terminal de télécommunication (19).

4. Système de télécommunication selon l'une des revendications 1 à 3,
caractérisé en ce que
en plus ou en variante de l'interrupteur d'actionnement (28), il est prévu des moyens d'affichage (29) qui sont couplés au terminal de télécommunication (19) par l'intermédiaire du deuxième nombre de lignes de bus (14, 15, 16, 17).

5. Système de télécommunication selon la revendication 4,
caractérisé en ce que
les moyens d'affichage (29) servent à l'affichage d'une réception correcte des informations d'urgence transmises.

6. Système de télécommunication selon la revendication 4,
caractérisé en ce que
les moyens d'affichage (29) servent à l'affichage de l'absence de panne du système d'appel d'urgence fonctionnant sur la base de l'interrupteur d'actionnement (28).

7. Terminal de télécommunication, en particulier terminal de télécommunication RNIS en vue de la mise en oeuvre dans un système de télécommunication selon l'une des revendications 1 à 6,
caractérisé en ce
qu'une sortie (24, 25) sert à la délivrance d'une tension continue à l'interrupteur d'actionnement (28) et/ou aux moyens d'affichage (29),
que la tension continue est produite à l'aide de l'alimentation fantôme servant à l'alimentation électrique du terminal de télécommunication (19),
que des moyens (46) en vue de la détection d'un courant continu à produire par la tension continue sont affectés à la sortie (24, 25) et
qu'en fonction de la détection dudit courant continu, le déclenchement d'une transmission d'une information d'appel d'urgence vers une centrale d'appel d'urgence et/ou un autre terminal participant est prévu.

8. Terminal de télécommunication selon la revendication 7,
caractérisé en ce
qu'un choix de destination est prévu en vue du déclenchement de la transmission de l'information d'appel d'urgence.
